# EUROPÄISCHE PATENTSCHRIFT

(11) **EP 3 101 145 B1**
(45) Veröffentlichungstag und Bekanntmachung des Hinweises auf die Patenterteilung: **10.10.2018**
(21) Anmeldenummer: 15170102.6
(22) Anmeldetag: 01.06.2015
(51) Int. Cl.: C21D 1/09, B23P 6/04, B23K 26/00, B23K 26/352, B23K 103/08, C22F 1/04

(54) **VERFAHREN ZUR VERRINGERUNG DER AUSBREITUNGSGESCHWINDIGKEIT EINES RISSES IN EINEM METALLSUBSTRAT**
METHOD FOR REDUCING THE PROPAGATION SPEED OF A CRACK IN A METAL SUBSTRATE
PROCÉDÉ DE RÉDUCTION DE LA VITESSE DE PROPAGATION D'UNE FISSURE DANS UN SUBSTRAT MÉTALLIQUE

(43) Veröffentlichungstag der Anmeldung: 07.12.2016
(73) Patentinhaber: Helmholtz-Zentrum Geesthacht Zentrum für Material- und Küstenforschung GmbH, 21502 Geesthacht (DE)
(72) Erfinder: Groth, Anne, 21502 Geesthacht (DE); Kashaev, Nikolai, 21522 Hittbergen (DE); Huber, Norbert, 21365 Adendorf (DE)
(74) Vertreter: Uexküll & Stolberg

(56) Entgegenhaltungen:
- EP-A1- 1 752 547
- EP-A1- 2 561 946
- US-A1- 2005 039 828
- DALONG CONG ET AL: "The thermal fatigue resistance of H13 steel repaired by a biomimetic laser remelting process", MATERIALS AND DESIGN, Bd. 55, 23. Oktober 2013 (2013-10-23), Seiten 597-604, XP055225310, GB ISSN: 0261-3069, DOI: 10.1016/j.matdes.2013.09.076

## Beschreibung

Die vorliegende Erfindung betrifft ein Verfahren zur Verringerung der Ausbreitungsgeschwindigkeit eines Risses in einem Metallsubstrat

### HINTERGRUND DER ERFINDUNG

Eine der zukünftigen Herausforderungen für die Luftfahrtindustrie ist die Entwicklung von geeigneten Strategien für die Wartung und Lebensdauerverlängerung der bestehenden Flugzeugflotte. Ein besonderes Problem stellt dabei die Ausbildung von Rissen, insbesondere von Ermüdungsrissen, und deren Wachstum in verschiedenen Flugzeugbauteilen dar. Risse deuten üblicherweise auf ein baldiges Versagen der betroffenen Bauteile hin, sodass relevante Bauteile regelmäßig kontrolliert, gewartet und gegebenenfalls sogar ausgetauscht werden müssen. In der Vergangenheit wurden bereits verschiedene Ansätze entwickelt, um das Wachstum von Ermüdungsrissen in verschiedenen Flugzeugbauteilen, wie zum Beispiel dem unteren Flugzeugkörper, zu verringern und somit die Lebensdauer der Bauteile zu verlängern. Besonders vorteilhaft sind solche Verfahren, die präventiv bereits vor Rissausbildung angewendet werden können, um eine Rissausbildung verringern oder bestenfalls zu verhindern. Derzeit werden üblicherweise sogenannte Rissstopper oder Rissverzögerer eingesetzt, die beispielsweise aus Titan oder CFRP gefertigt sind und ein Risswachstum verringern sollen. Da bei diesen Verfahren üblicherweise zusätzliche Materialien auf die Flugzeugbauteile aufgebracht werden, führen diese Verfahren in der Regel zu einer Gewichtszunahme des jeweiligen Bauteils. Weiterhin sind die Verbindungen zwischen der Flugzeughaut und dem Rissstopper oftmals aufwendig zu schweißen, was den Prozess insgesamt sehr aufwendig und teuer macht.

Es besteht daher ein großes Interesse daran, kostengünstige und einfach ausführbare Verfahren zur Verringerung der Ausbreitungsgeschwindigkeit von Rissen, insbesondere von Ermüdungsrissen, zu entwickeln. Weiterhin besteht ein Interesse daran, kostengünstige und einfach ausführbare Verfahren zu entwickeln, mit denen die Substratoberfläche bereits vor dem Auftreten eines Risses präventiv behandelt werden kann, um schon die Ausbildung eines Ermüdungsrisses zu verringern oder bestenfalls ganz zu verhindern. In diesem Zusammenhang stellen eigenspannungsbasierte Verfahren einen vielversprechenden Ansatz dar. Ein besonders vorteilhaftes Verfahren zur Erhöhung der Lebensdauer von verschiedensten Bauteilen ist das sogenannte Laserwärmebehandlungsverfahren. Bei diesem Verfahren werden Gefüge und Eigenspannungen in einem Metallsubstrat oberflächennah lokal beeinflusst, wodurch die Ausbreitungsgeschwindigkeit eines Risses verringert wird. Auf diese Weise kann die Lebensdauer des Metallsubstrats deutlich erhöht werden ohne dass zusätzliche Materialen geschweißt oder genietet werden. Das ursprüngliche Bauteil, also das Metallsubstrat, wird lediglich modifiziert, wodurch Gewicht und Kosten eingespart werden können.

Laserwärmebehandlungsverfahren wurden bereits zur Verringerung der Ausbreitungsgeschwindigkeit von Rissen angewendet. So beschreibt die US 5,701,492 beispielsweise ein Verfahren, bei dem die Substratoberfläche parallel zu den entstehenden Rissen erwärmt wird, wobei unter anderem auch ein Laser verwendet werden kann.

D. Schnubel et al. beschreiben in "Materials Science and Technology A 546 (2012) 8-14" die Verwendung eines defokussierten Lasers zur Beeinflussung von Eigenspannungen, um die Ermüdungsrissausbreitungsgeschwindigkeit zu verringern. Dabei wird der Laserstrahl linienförmig über die Substratoberfläche geführt.

Bei den bereits bekannten Verfahren wird der Laserstrahl punktförmig oder linienförmig über die Substratoberfläche geführt.

DALONG CONG et al. offenbart Untersuchungen zur Reparatur von thermischen Ermüdungsrissen auf der Oberflache eines Druckgussstahls durch die lokale Aufschmelzung der Werkstückoberflache mittels Laserstrahlung (Lasersurface Remelting). Das Wiederaufschmelzen der Substratoberflache mittels Laserstrahlung erfolgt in unterschiedlichen Mustern, wobei der Bereich, in dem die Aufschmelzung stattfindet, willkürlich gewählt wird.

EP 2 561 946 A1 beschreibt die Wärmebehandlung eines Metallsubstrats/Strukturbauteils eines Fahrzeugs, das mittels Punktschweißen mit einem weiteren Bauteil verbunden werden soll. Um Rissbildungen im Bereich der Schweißpunkte zu verhindern, wird das Metallsubstrat in eben dieser Region vor dem Schweißen mit Hilfe von Laserstrahlung wärmebehandelt. Dies bewirkt eine Verringerung der Bruchdehnung und damit eine Schwächung des Substrats.

US 2005/039828 A1 offenbart ein Verfahren zum Anlassen eines Metallsubstrats/Blechs mithilfe von Laserstrahlung. Mittels dem Verfahren wird ein Auftreten von spannungsbedingten Rissen vermindert, die beim Umlegen von Kanten zur Verbindung zweier Metallsubstrate entstehen.

Aus der EP 1 752 547 A1 ist ein Verfahren zum Verhindern der Ausbreitung von Rissen bekannt, wobei ein Muster aus punktförmigen Dellen in das Substrat eingebracht wird. Im Rahmen dieser Erfindung hat sich nun unerwarteter Weise gezeigt, dass der Effekt der mittels Laserwärmebehandlung erzeugten Eigenspannungen deutlich größer ist, wenn der Laserstrahl nicht in Form einer Linie oder eines Punktes, sondern in Form eines Kreises, eines Bogens oder einer Kurve über die Materialoberfläche geführt wird. Es wurde gefunden, dass mit dem erfindungsgemäßen Verfahren deutlich höhere Lebensdauern der bearbeiteten Materialien bei gleichzeitig geringem Prozess- und Kostenaufwand erreicht werden können. Ohne sich an eine bestimmte Theorie binden zu wollen, wird vermutet, dass dieser unerwartete Effekt in der positiven Überlagerung der Eigenspannungsfelder begründet liegt.

### BESCHREIBUNG DER ERFINDUNG

Der vorliegenden Erfindung liegt die Aufgabe zu Grunde, ein Verfahren zur Verfügung zu stellen, mit dem die Lebensdauer eines Metallsubstrats im Vergleich zu bereits bekannten Verfahren noch weiter verlängert wird. Insbesondere soll ein Verfahren zur Verfügung gestellt werden, mit dem die Ermüdungsrissausbreitungsrate im Vergleich zu bereits bekannten Verfahren noch weiter verringert wird. Ferner soll ein Metallsubstrat zur Verfügung gestellt werden, welches eine verringerte Ermüdungsrissausbreitungsrate aufweist.

Die erfindungsgemäßen Aufgaben werden durch ein Verfahren gemäß Patentanspruch 1 sowie durch ein Metallsubstrat gemäß Patentanspruch 8 gelöst.

Mit dem erfindungsgemäßen Verfahren können Lastwechselsteigerungen von mehr als 100% im Vergleich zu dem unbehandelten Grundsubstrat erreicht werden.

Demgemäß wird ein Verfahren zur Verfügung gestellt, durch das die Ausbreitungsgeschwindigkeit eines Risses in einem Metallsubstrat verringert werden kann. Dazu wird zunächst ein Riss in einem Metallsubstrat identifiziert, wobei der Riss zwei oder mehrere Rissenden aufweist. Danach wird das Metallsubstrat mittels Laserwärmebehandlung an einem oder mehreren Rissenden in den Ausbreitungsrichtungen des Risses erwärmt. Der Laserstrahl wird dabei so über die Substratoberfläche geführt, dass er die Form eines Ovals, eines Bogens oder einer Kurve beschreibt.
- Fig. 1: zeigt verschiedene Ausführungsformen der Erfindung.
- Fig. 2: zeigt schematisch die im Beispiel verwendeten Substrate.
- Fig. 3: zeigt die Entwicklung der Risslänge in Abhängigkeit von der Anzahl der angewendeten Lastwechsel und geometrischer Form, die der Laserstrahl beim Führen über die Substratoberfläche beschreibt.

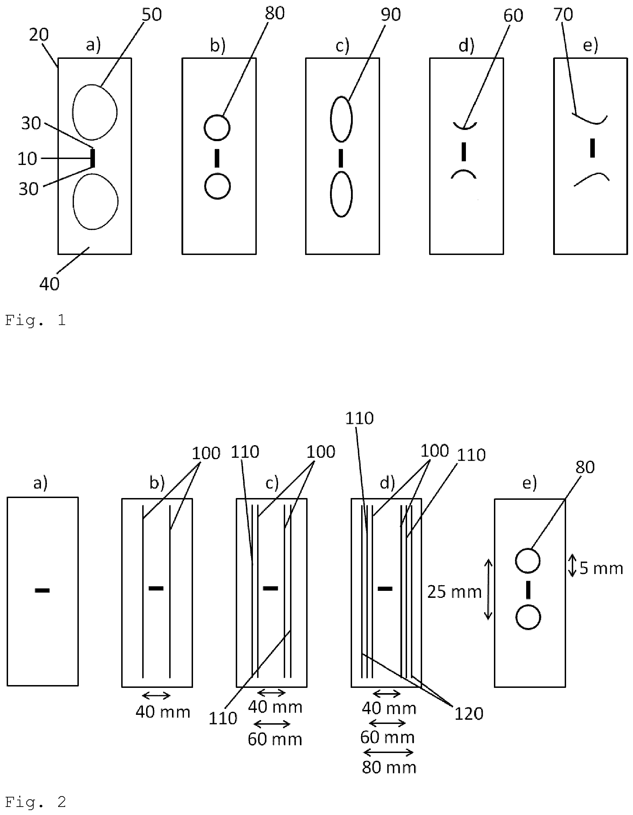

Gemäß einer Ausführungsform werden zunächst ein oder mehrere Risse **10** in dem Metallsubstrat **20,** dessen Lebensdauer verlängert werden soll, identifiziert. Der eine oder die mehreren Risse **10** weisen üblicherweise zwei Rissenden **30** auf. Es ist aber auch denkbar, dass der Riss **10** mehr als zwei Rissenden **30** aufweist. Anschließend wird das Metallsubstrat **20** an einem oder mehreren Rissenden **30** des vorher identifizierten Risses **10** mittels Laserwärmebehandlung erwärmt. Der Laserstrahl wird dabei so über die Substratoberfläche **40** geführt, dass er die Form eines Ovals **50,** eines Bogens **60** oder einer Kurve **70** beschreibt (siehe Fig. 1). Es wird also mittels Laserwärmebehandlung an einem oder mehreren Rissenden **30** eine ovale, bogenförmige oder kurvenförmige Struktur in das Metallsubstrat eingebracht. Oval **50** ist im Rahmen dieser Erfindung so zu verstehen, dass davon Kreise **80** und Ellipsen **90** als Spezialfälle umfasst sind.

Den Abstand zwischen Rissende **30** und der durch Laserwärmebehandlung in das Substrat **20** eingebrachten Struktur wird der Fachmann aufgrund seines allgemeinen Fachwissens auswählen. Falls die in das Substrat **20** eingebrachte Struktur ein Kreis ist, beträgt der Abstand zwischen Rissende **30** und dem Kreismittelpunkt bevorzugt 5 bis 15 mm, bevorzugter 8 bis 12 mm, am bevorzugtesten etwa 10 mm.

Gemäß einer Ausführungsform wird der Laserstrahl so über die Substratoberfläche **40** geführt, dass er die Form eines Ovals **50** beschreibt (Fig. 1). Bevorzugt beschreibt er die Form eines Kreises **80** (Fig. 1) oder einer Ellipse **90** (Fig. 1), bevorzugter eines Kreises **80** (Fig. 1). Bevorzugt weisen die Kreise **80** einen Durchmesser von 3-7 mm, bevorzugter 4-6 mm, noch bevorzugter etwa 5 mm, auf. Die Kreise **80** weisen bevorzugt einen Mittelpunktsabstand von 20-30 mm, bevorzugter etwa 25 mm, zueinander auf. Es sind jedoch auch andere Kreisdurchmesser und Mittelspunktsabstände denkbar, die der Fachmann entsprechend des vorliegenden Risses **10** frei auswählen kann.

Die Parameter der Laserwärmebehandlung wird der Fachmann anhand seines Fachwissens so wählen, dass das Metallsubstrat 20 nicht zu stark beeinträchtigt wird. Bevorzugt wird das Metallsubstrat **20** auf eine Temperatur unterhalb der Schmelztemperatur erwärmt. Bei Verwendung eines Aluminiumsubstrats wird das Substrat bevorzugt auf eine Temperatur zwischen 300 und 800°C, bevorzugter zwischen 400 und 700°C, noch bevorzugter auf etwa 600°C, erwärmt. Beispielsweise kann ein defokussierter Laser mit einem Spotdurchmesser von etwa 3,5 mm auf der Substratoberfläche **40,** einer Leistung von 600 W und einer Lasergeschwindigkeit von 1600 mm/min verwendet werden.

Gemäß einer in den Figuren veranschaulichten Ausführungsform weist der Riss **10** zwei Rissenden **30** auf und das Substrat **20** wird an beiden Rissenden **30** in den Ausbreitungsrichtungen des Risses **10** mittels Laserwärmebehandlung erwärmt. Gemäß einer anderen Ausführungsform weist der Riss **10** zwei Rissenden **30** auf und das Substrat **20** wird nur an einem Rissende **30** in der Ausbreitungsrichtung des Risses **10** mittels Laserwärmebehandlung erwärmt, wobei das Substrat **20** an dem anderen Rissende **30** unbehandelt verbleibt. Gemäß einer anderen Ausführungsform weist der Riss **10** mehr als zwei Rissenden **30** auf und das Substrat **20** wird an allen Rissenden **30** mittels Laserwärmebehandlung erwärmt. Es ist jedoch auch denkbar, dass das Substrat an einem oder mehreren Rissenden **30,** aber nicht an allen Rissenden **30** mittels Laserwärmebehandlung erwärmt wird. Die geometrische Struktur, die der Laserstrahl beim Führen über die Substratoberfläche **40** beschreibt, kann an jedem Rissende **30,** an dem der Laserstrahl über die Substratoberfläche **40** geführt wird, frei gewählt werden. Es ist also beispielsweise denkbar, dass der Laserstrahl an einem Rissende **30** eines Risses **10** so über die Substratoberfläche **40** geführt wird, dass er die Form eines Kreises **80** beschreibt und an einem anderen Rissende **30** desselben Risses **10** so über die Substratoberfläche **40** geführt wird, dass er die Form einer Kurve **70** beschreibt. Die geometrischen Strukturen können dabei unabhängig voneinander ausgewählt und kombiniert werden.

Das Metallsubstrat **20** kann beispielsweise Aluminium, Stahl, Titan oder Magnesium umfassen oder daraus bestehen. Gemäß einer bevorzugten Ausführungsform ist das Metallsubstrat **20** eine Aluminiumlegierung.

Die vorliegende Erfindung betrifft ferner ein Metallsubstrat **10,** welches durch das erfindungsgemäße Verfahren hergestellt ist.

Das durch das erfindungsgemäße Verfahren hergestellte Metallsubstrat **20** wird bevorzugt als Bauteil in einem Land-, Wasser- oder Luftfahrzeug verwendet. Besonders bevorzugt wird das Metallsubstrat **20** als Bauteil im unteren Flugzeugkörper eines Flugzeugs verwendet.

### Beispiel:

Die Erfindung wird nunmehr anhand der folgenden Beispiele näher erläutert, wobei die Beispiele die Erfindung in keiner Weise auf diese Ausführungsform beschränken.

Es wurde die Entwicklung der Risslänge in einem Metallsubstrat **20** in Abhängigkeit der angewendeten Lastwechsel und der geometrischen Form, in der der Laserstrahl bei der Laserwärmebehandlung über die Substratoberfläche **40** geführt wird, untersucht. Die Versuche wurden auf M(T)200-Proben aus AA2024T3 mit einer Dicke von 2 mm durchgeführt. Es wurde eine Laserleistung von 600 W, eine Lasergeschwindigkeit von 1600 mm/min und ein defokussierter Laser mit einem Spotdurchmesser 3,5 mm auf der Probenoberfläche verwendet. Es wurde zunächst ein Riss von 7 mm in die Mitte der Probe eingebracht (erodiert). Anschließend wurde das Substrat **20** einer fortlaufenden Anzahl von Lastwechseln ausgesetzt und die Risslänge in Abhängigkeit von der Anzahl der Lastwechsel bestimmt. Es wurden folgende Proben untersucht: Vergleichssubstrat a) unbehandeltes Substrat (siehe Fig. 2a); Substrat b) zwei in Ausbreitungsrichtung des Risses **10** mittels Laserwärmebehandlung aufgebrachte Linien **100** im Abstand von 40 mm zueinander (eine Linie pro Rissseite (siehe Fig. 2b), nicht erfindungsgemäß); Substrat c) zwei in Ausbreitungsrichtung des Risses **10** mittels Laserwärmebehandlung aufgebrachte Linien **100** im Abstand von 40 mm zueinander und zwei parallel dazu verlaufende, mittels Laserwärmebehandlung aufgebrachte Linien **110** im Abstand von 60 mm zueinander (zwei Linien pro Rissseite (siehe Fig. 2c), nicht erfindungsgemäß); Substrat d) zwei in Ausbreitungsrichtung des Risses **10** mittels Laserwärmebehandlung aufgebrachte Linien **100** im Abstand von 40 mm zueinander, zwei parallel dazu verlaufende, mittels Laserwärmebehandlung aufgebrachte Linien **110** im Abstand von 60 mm zueinander sowie zwei parallel dazu verlaufende, mittels Laserwärmebehandlung aufgebrachte Linien **120** im Abstand von 80 mm zueinander (drei Linien pro Rissseite (siehe Fig. 2d), nicht erfindungsgemäß); Substrat e) zwei in Ausbreitungsrichtung des Risses **10** mittels Laserwärmebehandlung aufgebrachte Kreise **80** mit jeweils einem Durchmesser von 5 mm und einem Mittelpunktsabstand von 25 mm (siehe Fig. 2e, erfindungsgemäß) .

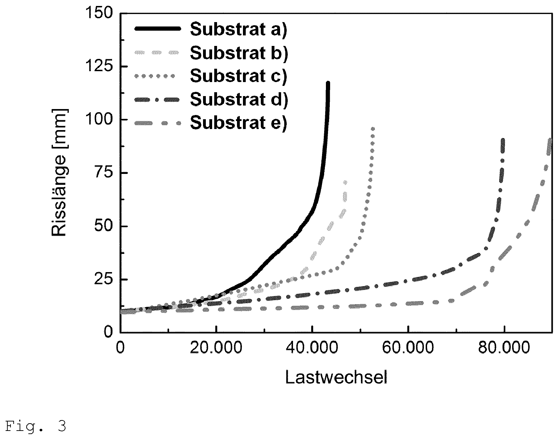

Die Ergebnisse sind in Figur 3 gezeigt. Es zeigt sich, dass durch das erfindungsgemäße Verfahren Lastwechselsteigerungen von mehr als 100% im Vergleich zum Grundmaterial erreicht werden können. Während Vergleichssubstrat a) bereits bei etwa 40000 Lastwechseln einen sprunghaften Anstieg der Risslänge zeigt, ist dies bei dem erfindungsgemäßen Substrat e) erst bei etwa 80000 Lastwechseln der Fall, wobei das Risswachstum selbst bei dieser hohen Anzahl an Lastwechseln deutlich langsamer voranschreitet als bei Vergleichssubstrat a) nach 40000 Lastwechseln. Substrat b) zeigt eine im Vergleich zu Vergleichssubsrat a) leicht erhöhte Lebensdauer, die durch das Aufbringen von zusätzlichen Linien weiter erhöht werden kann (vergleiche Substrat c) und d)). Überraschenderweise zeigt das erfindungsgemäße Substrat e) mit nur einem Kreis pro Rissseite eine deutlich erhöhte Lebensdauer im Vergleich zu Substrat d), bei dem drei Linien pro Rissseite mittels Laserwärmebehandlung auf das Substrat aufgebracht wurden.

Zur besseren Übersicht ist die Anzahl der Lastwechsel bei einer Risslänge von 65 mm für die verschiedenen Substrate in Tabelle 1 zusammengefasst:

**Tab. 1: Lastwechsel bei einer Risslänge von 65 mm.**

| | Lastwechsel bei einer Risslänge von 65 mm |
|---|---|
| Vergleichssubstrat a) (nicht erfindungsgemäß) | 41200 |
| Substrat b) (nicht erfindungsgemäß) | 46700 |
| Substrat c) (nicht erfindungsgemäß) | 51700 |
| Substrat d) (nicht erfindungsgemäß) | 79000 |
| Substrat e) (erfindungsgemäß) | 87100 |

## Patentansprüche

1. Verfahren zur Verringerung der Ausbreitungsgeschwindigkeit eines Risses (10) in einem Metallsubstrat (20), bei dem
(a) ein Riss (10) in dem Metallsubstrat (20) identifiziert wird, wobei der Riss (10) zwei oder mehrere Rissenden (30) aufweist,
(b) das Metallsubstrat (20) mittels Laserwärmebehandlung an einem oder mehreren Rissenden (30) in den Ausbreitungsrichtungen des Risses (10) erwärmt wird,
**dadurch gekennzeichnet, dass** der Laserstrahl so über die Substratoberfläche geführt wird, dass er die Form eines Ovals (50), eines Bogens (60) oder einer Kurve (70) beschreibt, wobei das Oval (50) ein Kreis (80) oder eine Ellipse (90 ist.

2. Verfahren nach Anspruch 1, **dadurch gekennzeichnet, dass** das Substrat (20) mittels Laserwärmebehandlung auf eine Temperatur unterhalb der Schmelztemperatur des Substrats (20) erwärmt wird.

3. Verfahren nach einem der vorhergehenden Ansprüche, **dadurch gekennzeichnet, dass** der Riss (10) zwei Rissenden (30) aufweist und das Substrat (20) an beiden Rissenden (30) in den Ausbreitungsrichtungen des Risses (10) mittels Laserwärmebehandlung erwärmt wird.

4. Verfahren nach einem der vorhergehenden Ansprüche, **dadurch gekennzeichnet, dass** der Riss (10) zwei Rissenden (30) aufweist und das Substrat (20) an beiden Rissenden (30) in den Ausbreitungsrichtungen des Risses (10) mittels Laserwärmebehandlung erwärmt wird, wobei der Laserstrahl an beiden Rissenden (30) so über die Substratoberfläche (40) geführt wird, dass er die Form eines Kreises (80) beschreibt.

5. Verfahren nach Anspruch 4, **dadurch gekennzeichnet, dass** die Kreise (80) einen Durchmesser von 3-7 mm, bevorzugt 4-6 mm, bevorzugter etwa 5 mm, und einen Mittelpunktsabstand von 20-30 mm, bevorzugt etwa 25 mm, zueinander aufweisen.

6. Verfahren nach einem der vorhergehenden Ansprüche, **dadurch gekennzeichnet, dass** das Metallsubstrat (20) eine Aluminiumlegierung ist.

7. Verfahren nach Anspruch 6, **dadurch gekennzeichnet, dass** das Material auf eine Temperatur zwischen 300 und 800°C erwärmt wird, bevorzugt zwischen 400 und 700°C, bevorzugter auf etwa 600°C.

8. Metallsubstrat, aufweisend einen Riss mit zwei oder mehreren Rissenden, **dadurch gekennzeichnet, dass** es durch ein Verfahren gemäß einem der Ansprüche 1 bis 7 hergestellt ist.

## Claims

1. Method for reducing the speed of propagation of a crack (10) in a metal substrate (20), wherein
(a) a crack (10) is identified in the metal substrate (20), wherein the crack (10) has two or more crack ends (30),
(b) the metal substrate (20) is heated by means of laser heat treatment at one or more crack ends (30) in the propagation directions of the crack (10),
**characterised in that** the laser beam is guided over the substrate surface so that it defines the form of an oval (50), an arc (60) or a curve 70, whereby the oval (50) is a circle (80) or an ellipse (90).

2. Method according to claim 1, **characterised in that** the substrate (20) is heated by means of laser heat treatment to a temperature below the melt temperature of the substrate (20).

3. Method according to one of the preceding claims, **characterised in that** the crack (10) has two crack ends (30) and the substrate (20) is heated by means of laser heat treatment at both crack ends (30) in the propagation directions of the crack (10).

4. Method according to one of the preceding claims, **characterised in that** the crack (10) has two crack ends (30) and the substrate (20) is heated by means of laser heat treatment at both crack ends (30) in the propagation directions of the crack (10), wherein the laser beam is guided at both crack ends (30) over the substrate surface (40) so that it defines the form of a circle (80).

5. Method according to claim 4, **characterised in that** the circles (80) have a diameter of 3 - 7 mm, preferably 4 - 6 mm, more preferably approximately 5 mm, and a mid-point distance of 20 - 30 mm, preferably approximately 25 mm, relative to each other.

6. Method according to one of the preceding claims, **characterised in that** the metal substrate (20) is an aluminium alloy.

7. Method according to claim 6, **characterised in that** the material is heated to a temperature between 300 and 800°C, preferably between 400 and 700°C, more preferably to approximately 600°C.

8. Metal substrate, which exhibits a crack with two or more crack ends, **characterised in that** it is produced by a method according to one of claims 1 to 7.

## Revendications

1. Procédé de réduction de la vitesse de propagation d'une fissure (10) dans un substrat métallique (20), dans lequel
(a) on identifie une fissure (10) dans le substrat métallique (20), dans lequel la fissure (10) présente deux ou plusieurs extrémités de fissure (30),
(b) on chauffe le substrat métallique (20) au moyen d'un traitement thermique au laser à une ou plusieurs des extrémités de fissure (30) dans les directions de propagation de la fissure (10),
**caractérisé en ce que** l'on conduit le faisceau laser sur la surface du substrat de telle manière qu'il décrive la forme d'un ovale (50), d'un arc (60) ou d'une courbe (70), dans lequel l'ovale (50) est un cercle (80) ou une ellipse (90).

2. Procédé selon la revendication 1, **caractérisé en ce que** l'on chauffe le substrat (20) au moyen d'un traitement thermique au laser à une température située en dessous de la température de fusion du substrat (20) .

3. Procédé selon l'une quelconque des revendications précédentes, **caractérisé en ce que** la fissure (10) présente deux extrémités de fissure (30) et on chauffe le substrat (20) aux deux extrémités de fissure (30) dans les directions de propagation de la fissure (10) au moyen d'un traitement thermique au laser.

4. Procédé selon l'une quelconque des revendications précédentes, **caractérisé en ce que** la fissure (10) présente deux extrémités de fissure (30) et on chauffe le substrat (20) aux deux extrémités de fissure (30) dans les directions de propagation de la fissure (10) au moyen d'un traitement thermique au laser, dans lequel on conduit le faisceau laser aux deux extrémités de fissure (30) sur la surface du substrat (40) de telle manière qu'il décrive la forme d'un cercle (80).

5. Procédé selon la revendication 4, **caractérisé en ce que** les cercles (80) présentent un diamètre de 3 - 7 mm, de préférence de 4 - 6 mm, de préférence encore d'environ 5 mm, et une distance des centres de 20 - 30 mm, de préférence d'environ 25 mm l'un de l'autre.

6. Procédé selon l'une quelconque des revendications précédentes, **caractérisé en ce que** le substrat métallique (20) est un alliage d'aluminium.

7. Procédé selon la revendication 6, **caractérisé en ce que** l'on chauffe le matériau à une température comprise entre 300 et 800°C, de préférence entre 400 et 700°C, de préférence encore d'environ 600°C.

8. Substrat métallique, présentant une fissure avec deux ou plusieurs extrémités de fissure, **caractérisé en ce qu'**il est fabriqué par un procédé selon l'une quelconque des revendications 1 à 7.
